# EUROPEAN PATENT APPLICATION

(11) **EP 4 446 198 A1**
(43) Date of publication of application: **16.10.2024**
(21) Application number: 23167563.8
(22) Date of filing: 12.04.2023
(51) Int. Cl.: B62B 9/14

(54) **CANOPY FOR A CHILD CARRYING UNIT**

(71) Applicant: Thule Sweden AB, 335 04 Hillerstorp (SE)
(72) Inventor: Carl, Thulin, Bankeryd (SE)
(74) Representative: Wallentin, Lars

(57) **Abstract**

Disclosed is a canopy (10) for a child carrying unit (1). The canopy (10) comprises a flexible cover (11) for at least partially covering a child. The canopy (10) further comprises a connecting arrangement configured to releasably fix at least three different connecting portions of the flexible cover (11) to each other. The connecting arrangement is configured to establish a first connection (30) of the connecting portions and a different second connection (40) of the connecting portions by means of connecting partners (51, 52, 53) provided on the flexible cover (11). The first connection (30) and the second connection (40) share a common connecting partner (53).

## Description

### FIELD

The present disclosure relates to a covering device for a child carrying unit, in particular to a canopy for a child carrying unit, and to a child carrying unit comprising a covering device, for example a canopy.

### BACKGROUND

Arrangements for shielding children seated in strollers or other child carrying units are known. Such shielding arrangements are typically used for shielding a seated child from sun, wind, or rain. The shielding structures create a shielded space in which the seated child is protected. There are shielding structures in which the shielding area is variable, for example by folding and unfolding the shielding structure in a bellows type manner.

Known systems have the drawback that they are complex in structure or cumbersome to operate.

### SUMMARY

It is an object of the present disclosure to provide an improved configuration of a covering device in which the above drawbacks are overcome.

The object is solved by a canopy according to the independent claim. Advantageous further formations may be gleaned from the dependent claims and from the below description.

Disclosed is a covering device for a child carrying unit. The covering device may be a canopy or may form part of a canopy. The covering device comprises a flexible cover for at least partially covering a child. The covering device may a part of a canopy for or of a child carrying unit or may be a separate add-on part for a child carrying unit, for example a rain cover, for example a rain cover which is mounted on an existing canopy of a child carrying unit.

Further disclosed is a connecting arrangement configured to releasably fix at least three different connecting portions of the flexible cover to each other. The connecting arrangement is configured to establish a first connection of the connecting portions and a second, different connection of the connecting portions by means of connecting partners provided on the flexible cover. The first connection and the second connection share a common connecting partner. Furthermore, a shielding structure and a canopy comprising the flexible cover and the connecting arrangement is disclosed.

In some embodiments, the different connecting portions of the flexible cover comprise or are provided on end portions of a collapsible cover portion, for example on end portions of a functional layer such as a mesh fabric providing enhanced air ventilation or a flexible window. One of the different connecting portions of the flexible cover may comprise or may be provided on an edge portion of a covering layer provided on the collapsible cover portion. The covering layer may be a covering flap.

In some embodiments, when the first connection is established, the flexible cover is in a collapsed configuration in which the collapsible cover portion of the flexible cover is in a collapsed state.

In some embodiments, when the first connection and the second connection are released, the flexible cover is in an extendable configuration in which the collapsible cover portion of the flexible cover can be extended and made available for shielding purposes and the covering layer is in an openable configuration in which the covering layer may be at least partially unfolded from the collapsible cover portion.

In some embodiments, when the second connection is established, the covering layer of the collapsible cover portion is in a closed state. For example, the flexible cover may be covered by the covering flap.

In some embodiments, the connecting partners are configured to establish a continuous connection along a predetermined length of the connecting portions. The predetermined length may be a portion of the total length of the connecting portions. In other embodiments, the predetermined length may be the full available length of the connecting portions. In some embodiments, the connecting partners may be provided along the entire length of the connecting portions.

In some embodiments, the connecting arrangement is configured to join the connecting portions by interlocking the connecting partners. Interlocking may be provided by positively locking the connecting partners.

In some embodiments, the connecting arrangement comprises a zipper arrangement with zipper partners forming the connecting partners and two sliders. The zipper partners may be zipper bands or zipper tapes.

In some embodiments, the sliders are permanently coupled to the zipper partners such that the zipper arrangement is not divisible or not unhookable. For example, the ends of the zipper partners may be connected to each other, for example sewn to each other.

In some embodiments, a first zipper partner of the zipper partners is assigned to a first end portion of a collapsible cover portion. A second zipper partner may be assigned to a free edge portion of the covering flap. The third zipper partner may be assigned to a second end portion, for example to the second end portion of the collapsible cover portion. The first slider of the two sliders may be configured to engage with the first zipper partner and the third zipper partner. The first slider of the two sliders may be configured to be in permanent engagement with the first zipper partner and the third zipper partner. The second slider of the two sliders may be configured to engage with the first zipper partner and the second zipper partner. The second slider can be configured to be in permanent engagement with the first zipper partner and the second zipper partner.

In some embodiments, the connecting partners are connecting partners of a magnetic connection or of a hook and loop connection, such as a Velcro connection.

In some embodiments, the canopy further comprises a supporting structure for supporting the flexible cover. The supporting structure may comprise two or more cross members supporting the flexible cover. A first cross member for supporting the flexible cover may be provided in a region at which the first end portion of the collapsible cover portion is provided. A second cross member for supporting the flexible cover may be provided in a region at which the second end portion of the collapsible cover portion is provided. For example, the first cross member and the second cross member may be detachably coupled to the flexible cover in regions where the first end portion and the second end portion of the collapsible cover portion are provided. The flexible cover may comprise an attachment portion for attaching the canopy to a child carrying unit. The cross members may be pivotably coupled to the attachment portion. For example, if the first cross member and the second cross member are pivotably coupled to the attachment portion and support the flexible cover in a manner as it is mentioned before, pivoting the first cross member and the second cross member towards each other transfers the collapsible cover portion into a collapsed state whereas pivoting the first cross member and the second cross member away from each other transfers the collapsible cover portion towards an extended state.

Furthermore, a child carrying unit may be provided. The child carrying unit may be a stroller. The child carrying unit may comprise a frame assembly with wheels. The wheels support the frame assembly on the ground. The child carrying unit may further comprise a seat, bed or bassinet for supporting a child. The child carrying unit may further comprise a canopy according to one of the above-described embodiments and configurations. The canopy may be permanently fixed to the child carrying unit or may be detachably fixed to the child carrying unit.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view of a flexible cover on a canopy according to an embodiment, wherein a collapsible cover portion of the flexible cover is in a collapsed state.
Fig. 2 shows a perspective view of the flexible cover, wherein the collapsible cover portion of the flexible cover is in an extended state and a covering layer being released.
Fig. 3 shows a perspective view of the flexible cover, wherein the collapsible cover portion of the flexible cover is in the extended state and the covering layer being fixed.
Fig. 4 shows a closer view from the left on a canopy according to the embodiment.
Fig. 5 shows another view from the left on the canopy according to the embodiment in a different state.
Fig. 6 shows a view from the left on the canopy.
Fig. 7 shows the canopy of Fig. 6 from the right side.
Fig. 8 shows a state of the canopy in which the covering layer or flap is closed.
Fig. 9 shows the canopy of Fig. 8 from the right side.
Fig. 10 shows a child carrying unit with a canopy according to an embodiment.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION OF EMBODIMENTS

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools.

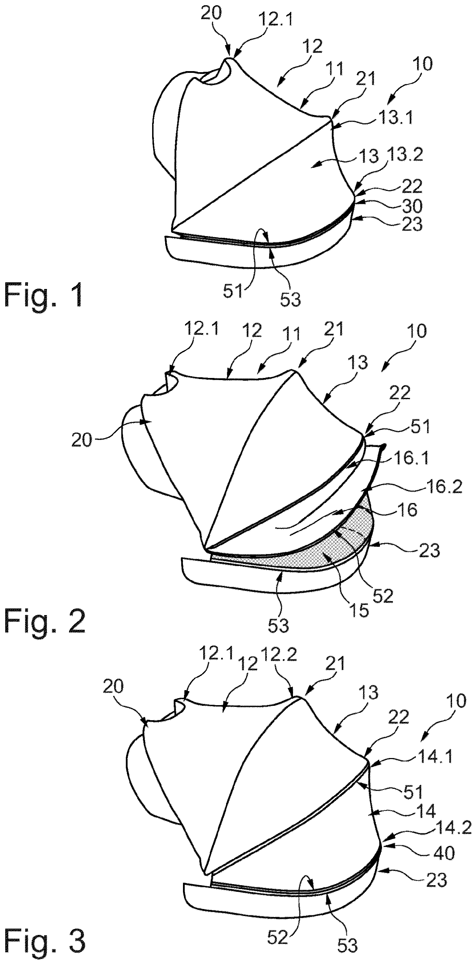

Fig. 1 shows a covering device 10 according to an embodiment. The covering device 10 may be embodied as a canopy for a stroller. The covering device comprises a flexible cover 11. The flexible cover 11 can comprise a bendable sheet like material. The material may be elastic or non-elastic. For example, the flexible cover 11 can comprise one or more portions made of a fabric. Some of the portions may be stretchable. The flexible cover 11 can be transferred between an extended configuration and a collapsed configuration. In the extended configuration, a larger area of the flexible cover 11 is available for shielding a child. In the collapsed configuration, a reduced area of the flexible cover is available for shielding a child.

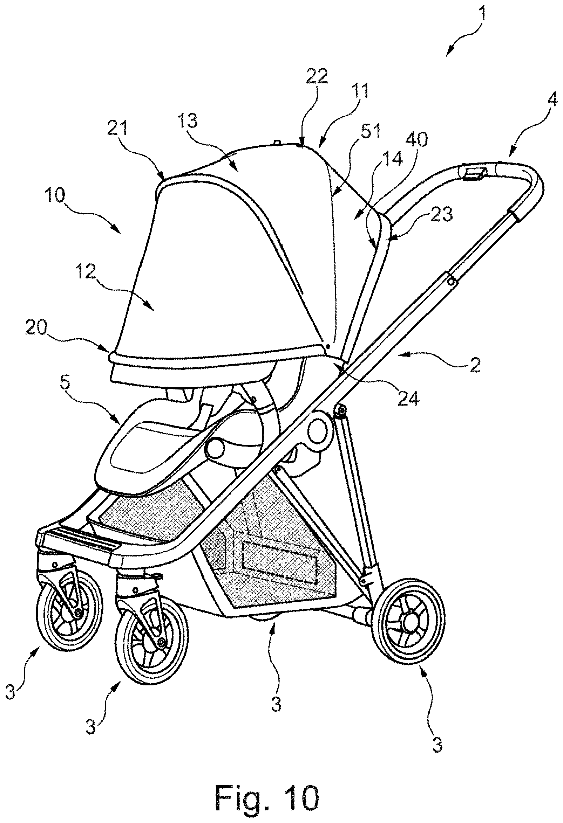

The flexible cover 11 comprises multiple cover portions 12, 13, 14 provided in this order in longitudinally rearward direction, i.e. from left to right in Figs. 3 and 10. In the embodiment, the flexible cover 11 comprises a first cover portion 12 which may also be referred to as front cover portion, a second cover portion 13 which may also be referred to as middle cover portion, and a third cover portion 14 forming the rearmost or back cover portion. However, it is possible to implement configurations with a different number of cover portions, for example two cover portions or more than three cover portions.

At least one of the cover portions 12, 13, 14 is transferable between a folded configuration and an extended configuration. In the embodiment, all cover portions are transferable between a folded configuration and an extended configuration. Fig. 3 shows a state in which all cover portions 12, 13, 14 are in the extended or unfolded configuration. Fig. 1 shows a state in which the third cover portion 14 is in a folded or collapsed state. The third cover portion 14 may therefore also be referred to as collapsible cover portion in the following.

Adjacent ones of the cover portions 12, 13, 14 are connected to each other at joining sections 21, 22. The first cover portion 12 and the second cover portion 13 may be connected to each other at a first joining section 21. The second cover portion 13 and the third cover portion 14 may be connected to each other at a second joining section 22. The joining sections 21, 22 may comprise a seam connection between adjacent cover portions. The joining sections 21, 22 may be or may form a supporting portion at which the cover portions 12, 13, 14 are supported by a supporting structure, for example hoop type or bracket type members. Attachment portions for attaching to the supporting structure may be provided on an inner side of the flexible cover 11 at the joining sections 21, 22.

As is shown in Fig. 3, the first cover portion 12 comprises a first end portion 12.1, for example a front end portion, and a second end portion 12.2, for example a rear end portion. The first end portion 12.1 may be connected to or may form a front support 20. The second end portion 12.2 is coupled to or forms part of the first joining section 21. The second end portion 12.2 is connected to the second cover portion 13.

The second cover portion 13 comprises a first end portion 13.1 and a second end portion 13.2. Both end portions are indicated in Fig. 1. The first end portion 13.1 is coupled to the second end portion 12.2 of the first cover portion 12 at the first joining section 21. The second end portions 13.2 of the second cover portion 13 is coupled to or forms part of the second joining section 22. The second end portion 13.2 of the second cover portion 13 is connected to the third cover portion 14.

As is shown in Fig. 3, the third cover portion 14 comprises a first end portion 14.1, for example at a front end portion. The first end portion 14.1 of the third cover portion 14 may be coupled to the second end portion 13.2 of the second cover portion 13 at the second joining section 22. The first end portion 14.1 may be connected to or may form part of the second joining section 22. The third cover portion 14 comprises a second end portion 14.2, for example a rear end portion. The second end portion 14.2 of the third cover portion 14 may be coupled to a rear support at a third joining section 23. In a modification, the third cover portion 14 may be coupled to a further cover portion instead of to the rear support via the third joining section 23.

The third cover portion 14 comprises a double layer construction. The third cover portion 14 may comprise a functional layer 15 and a covering layer 16 for covering the functional layer 15. The functional layer 15 may provide enhanced air ventilation. The functional layer may provide a view on a seated child. The functional layer 15 may comprise a mesh fabric 17 and/or a flexible window.

The covering layer 16 may comprise a fabric layer, for example a wind and/or waterproof or repellant fabric. The covering layer 16 and the functional layer 15 may together form the third cover portion 14. The covering layer 16 may be a covering flap. A first end portion 16.1 of the covering layer 16 and a first end portion 15.1 of the functional layer 15 may be fixedly and permanently coupled to the second joining section 22. In some configurations, the first end portion 16.1 of the covering layer 16 and the first end portion 15.1 of the functional layer 15 are fixed to each other, for example sewn to each other, at the second joining section 22. A second end portion 15.2 of the functional layer 15 may be fixedly and permanently coupled to the third joining section 23 and/or rear support. A second end portion 16.2, for example a free edge portion, of the covering layer 16 is configured detachably couplable to the third joining section 23.

A first zipper partner 51 is provided on the second joining section 22, for example coupled to the first end portion 14.1 of the third cover portion 14 and/or coupled to the second end portion 13.2 of the second cover portion 13. The first zipper partner 51 may be connected to the first end portion 16.1 of the covering layer 16 and/or to the first end portion 15.1 of the functional layer 15, for example by sewing.

A second zipper partner 52 is fixed to the second end portion 16.2 of the covering layer 16, for example sewn to a rear edge portion of the covering layer 16.

A third zipper partner 53 is fixed, for example sewn, to the rear support and/or fixed, for example sewn, to the second end portion 15.2 of the functional layer 15.

The zipper partners may comprise a zipper tape or zipper band. The zipper partners are all examples of possible connecting partners that allow a continuous connection along a predetermined length of the connecting portions. However, the invention is not limited to such connecting partners and other connections may be implemented.

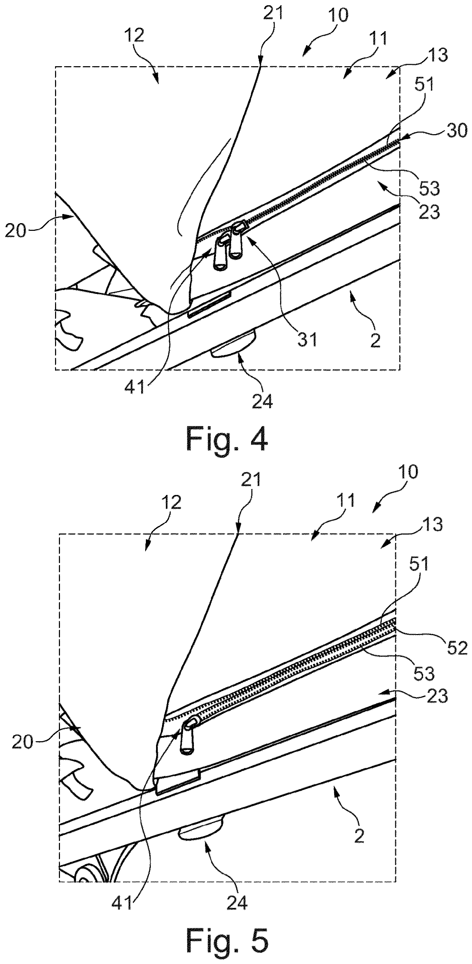

A first slider 31 may be coupled to the first zipper partner 51 and the third zipper partner 53 such that moving the slider from one end of the zipper partners 51, 53 to the other end releases or establishes a first connection 30 between the first zipper partner 51 and the third zipper partner 53. In the embodiment, the first connection 30 is established when the first slider 31 is moved to the right side of the canopy as shown in Fig. 4.

When the first connection 30 is established the second joining section 22 is fixed to the third joining section 23 and/or the rear support, and the third cover portion 14 including the functional layer 15 and the covering layer 16 is collapsed or folded (see Figs. 1 and 4). The first end portion 14.1 and the second end portion 14.2 of the first cover portion 14 are folded towards each other and coupled to each other.

When the first connection 30 is released, the flexible cover 11 is in an extendable configuration in which the collapsible cover portion 14 can be extended and made available for shielding purposes by moving the joining section 22 in forward direction away from the third joining section to a position as shown in Fig. 2.

The first zipper partner 51 and the third zipper partner 53 may be fixed to each other at their end portions to form a closed loop or may be configured to block a removal of the first slider 31 from the first zipper partner 51 and the third zipper partner 53.

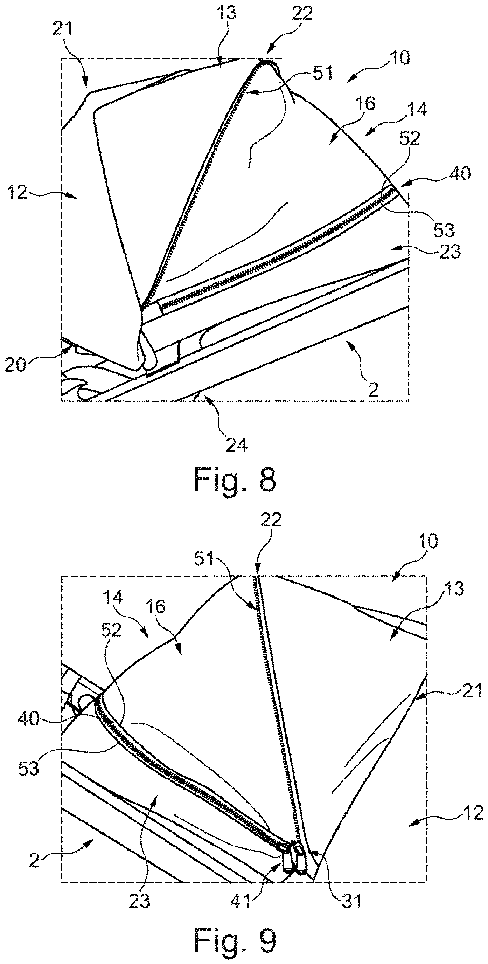

A second slider 41 may be coupled to the second zipper partner 52 and the third zipper partner 53 such that moving the second slider 41 from one end of the zipper partners 52, 53 to the other end releases or establishes a second connection 40 between the second zipper partner 51 and the third zipper partner 53. In the embodiment, the second connection 40 is established when the second slider 41 is positioned on the right side of the covering device 10 as is shown in Fig. 9.

When the second connection 40 is established, the covering layer 16 fully covers the functional layer 15 and the second end portion 16.2 of the covering layer 16 is fixed to the third joining section 23 and/or the rear support (see Fig. 3). In other words, an air ventilation passage or window as provided in the functional layer 15 is covered and the covering layer 16 is tightly fitted. The covering layer 16 is in a closed state.

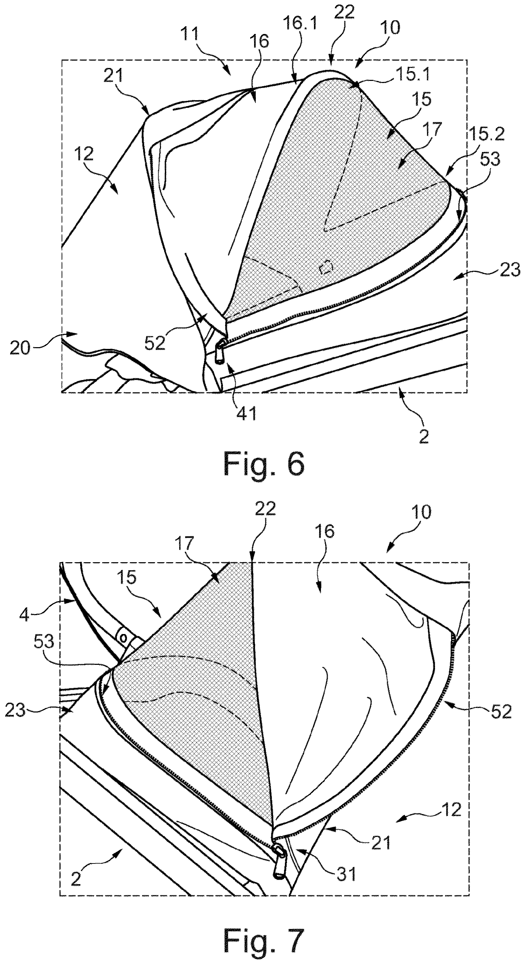

When the second connection 40 is released, the second end portion 16.2 of the covering layer 16 is loose and the covering layer 16 may be at least partially removed from the air ventilation layer 15 and brought into an opened configuration, for example by turning over the covering layer about its fixed first end portion 16.1 as for example indicated in Fig. 6.

It is noted that a fixation portion may be provided on an inner side of the covering layer 16 at the first end portion 16. 1 allowing to fix the covering layer 16 in the opened configuration. The second zipper partner 52 and the third zipper partner 53 may be fixed to each other at their end portions or may be configured to block a removal of the second slider 41 from the second zipper partner 52 and the third zipper partner 53.

As is clear from the above, the first connection 30 and the second connection 40 share a common connecting partner, namely the third zipper partner 53. The first slider 31 may be permanently engaged with the third zipper partner 53 and the first zipper partner 51. The second slider 41 may be permanently engaged with the third zipper partner 53 and the second zipper partner 52.

The covering device 10 may comprise a supporting structure for supporting the flexible cover 11 and for giving the flexible cover 11 a predetermined hood shape. The supporting structure may comprise multiple supports such as cross members, for example U-shaped supports such as hoops or brackets, supporting the flexible cover 11 at the joining sections 21, 22, and may comprise the front support 20 and optionally also the rear support 23. The supports may be pivotably coupled to an attachment portion 24, for example at free end portions thereof, in particular such that the supports are pivotable about one and the same pivot axis.

The attachment portion 24 is configured for an attachment to a child carrying unit 1, for example a stroller or baby carriage. An exemplary child carrier unit 1 with a mounted covering device 10 is shown in Fig. 10. The attachment portion 24 may be configured to be detachably mountable to a frame assembly 2 of the child carrying unit 1. The attachment portion 24 may comprise a snap-in configuration allowing to clip the attachment portion 24 on a frame portion. The covering device 10 comprises two attachment portions, one on each side of the covering device 10. Wheels 3 are supported to a lower portion of the frame assembly 2 and support the frame assembly 2 on the ground. The frame assembly 2 comprises a gripping portion 4 configured to be gripped by a user for handling the child carrying unit 1. In the embodiment, a seat 5 is supported between side portions of the frame assembly 2. The covering device 10 is configured as a canopy and is attached to the side portions of the frame assembly by means of the attachment portions 24 and extends over and across the seat 5. The pivot axis as defined by the attachment portions 24 extends in cross direction of the child carrying unit 1.

A method for operating the covering device 10 will be described in the following with reference to Figs. 4 to 9.

Fig. 4 shows a left side view on the covering device 10 mounted to the frame assembly 2 of the child carrying unit 1. The covering device 10 is in a collapsed and closed configuration in which the third cover portion 14 is collapsed and the first connection 30 is established. Both sliders 31, 41 are arranged in a respective first position on the left side of the canopy. The second connection 40 is released.

In the state shown in Fig. 5, the first slider 31 was moved to a second position on the opposite side of the covering device 10. Accordingly, the first slider 31 and the second slider 41 are arranged on opposite ends of the third zipper partner 53. In this state, the first connection 30 and the second connection 40 are both released or open. Accordingly, in this state, the covering device 10 is extendable by unfolding the third cover portion 14. At the same time, the covering layer 16 is loosely provided on the functional layer 15 and removable from the functional layer 15 as it is detached from the third zipper partner 53.

Fig. 6 and Fig. 7 show a state in which the covering layer 16 was turned over and put on the second cover portion 13. The functional layer 15 is uncovered and air may pass through the mesh.

Fig. 8 and Fig. 9 show a state in which the second slider 41 was moved to a second position on the opposite side of the covering device 10, namely next to the first slider 31. In this state, the second connection 40 is established or closed by coupling the second zipper partner 52 with the third zipper partner 53. The covering layer 16 is now fixedly arranged across the functional layer 15 at the first end portion 16.1 and the second end portion 16.2 and thus fixedly integrated into the flexible cover 11.

While in the above embodiment, the second zipper partner is provided on a covering layer, it is noted that alternative configurations are possible in which different connecting portions are used. For example, it is possible to provide an extendable covering device by providing a first connecting partner on the first joining section 21, a second connecting partner on the second joining section 22 and a third common connecting partner at the third joining section 23. In this way, it is possible to establish a first connection in which only the third cover portion 14 is collapsed and a second connection in which the second cover portion 13 and the third cover portion 14 are collapsed.

In conclusion, it is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims and their legal equivalents.

## Claims

1. Canopy (10) for a child carrying unit (1), said canopy (10) comprising
a flexible cover (11) for at least partially covering a child, and
a connecting arrangement configured to releasably fix at least three different connecting portions of said flexible cover (11) to each other,
wherein said connecting arrangement is configured to establish a first connection (30) of said connecting portions and a different second connection (40) of said connecting portions by means of connecting partners (51, 52, 53) provided on said flexible cover (11),
wherein said first connection (30) and said second connection (40) share a common connecting partner (53).

2. Canopy (10) according to claim 1, wherein said different connecting portions of said flexible cover (11) comprise or are provided on end portions of a collapsible cover portion (14), for example on end portions of a functional layer (15) such as a mesh fabric providing enhanced air ventilation or a flexible window, and on an edge portion of a covering layer (16), for example a covering flap, provided on said collapsible cover portion (14).

3. Canopy (10) according to claim 1 or claim 2, wherein when said first connection (30) is established, said flexible cover (11) is in a collapsed configuration in which said collapsible cover portion (14) of said flexible cover (11) is in a collapsed state.

4. Canopy (10) according to claim 2 or claim 3, wherein when said first connection (30) and said second connection (40) are released, said flexible cover (11) is in an extendable configuration in which said collapsible cover portion (14) of said flexible cover (11) can be extended and made available for shielding purposes and said covering flap (16) is in an openable configuration in which said covering layer (16) may be at least partially unfolded from said collapsible cover portion (14).

5. Canopy (10) according to one of claims 2, 3 or 4, wherein when said second connection (40) is established, said covering layer (16) of said collapsible cover portion (14) is in a closed state.

6. Canopy (10) according to one of the preceding claims, wherein said connecting partners (51, 52, 53) are configured to establish a continuous connection along a predetermined length of said connecting portions.

7. Canopy (10) according to one of the preceding claims, wherein said connecting arrangement is configured to join said connecting portions by interlocking said connecting partners.

8. Canopy (10) according to claim 7, wherein said connecting arrangement comprises a zipper arrangement with zipper partners, for example zipper bands or tapes, forming said connecting partners (51, 52, 53) and two sliders (31, 41).

9. Canopy (10) according to claim 8, wherein said sliders (31, 41) are permanently coupled to said zipper partners such that said zipper arrangement is not divisible or not unhookable.

10. Canopy (10) according to claim 8 or claim 9,
wherein a first zipper partner (51) is assigned to a first end portion (14.1) of a collapsible cover portion (14), a second zipper partner (52) is assigned to a free edge portion (16.2) of said covering layer (16), and a third zipper partner (53) is assigned to a second end portion (14.2) of said collapsible cover portion (14),
wherein a first slider (31) of said two sliders is configured to engage with said first zipper partner (51) and said third zipper partner (53) and wherein a second slider (41) of said two sliders is configured to engage with said third zipper partner (53) and said second zipper partner (52).

11. Canopy (10) according to one of claims 1 to 6, wherein said connecting partners (51, 52, 53) are connecting partners of a magnetic connection or of a hook and loop connection, such as a Velcro connection.

12. Canopy (10) according to one of the preceding claims, further comprising a supporting structure for supporting said flexible cover, wherein said supporting structure comprises two or more cross members supporting said flexible cover, wherein said flexible cover (11) may comprise an attachment portion (24) for attaching said canopy (10) to a child carrying unit (1), and wherein said cross members may be pivotably coupled to said attachment portion.

13. Child carrying unit (1) comprising,
a frame assembly (2) with wheels (3),
a seat or bed arrangement (5), and
a canopy (10) according to one of the preceding claims, said canopy being fixable on said child carrying unit (1).
